(19) Europäisches Patentamt
European Patent Office
Office européen des brevets

(11) **EP 3 162 874 A1**

(12) **EUROPEAN PATENT APPLICATION**

(43) Date of publication:
**03.05.2017 Bulletin 2017/18**

(51) Int Cl.:
***C09K 11/88*** *(2006.01)* ***C09K 11/02*** *(2006.01)*

(21) Application number: **15192630.0**

(22) Date of filing: **02.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ETH Zurich**
**8092 Zurich (CH)**

(72) Inventors:
- **WOOD, Vanessa**
  **8044 Zürich (CH)**
- **YAREMA, Maksym**
  **8057 Zürich (CH)**
- **YAREMA, Olesya**
  **8057 Zürich (CH)**

(54) **LUMINESCENT SEMICONDUCTOR NANOCRYSTALS AND METHODS FOR MAKING SAME**

(57) Nanocrystalline particulate material with luminescent properties is proposed having the following composition:

$$M^{I}_{a}M^{II}_{b}M^{III}_{c}M^{VI}$$

wherein
$M^{I}$ is selected from the group consisting of: Cu, Ag, and combinations thereof;
$M^{II}$ is selected from the group consisting of: Zn, Cd, and combinations thereof;
$M^{III}$ is selected to be In;
$M^{VI}$ is selected from the group consisting of: Se, Te and combinations thereof;
and wherein a, b, and c designate the atomic proportions within $M^{I}$, $M^{II}$, and $M^{III}$ and the sum of a, b and c is equal to 1, wherein a is in the range of 0.22-0.35; b is in the range of 0.0003-0.2; c is in the range of 0.52-0.66.

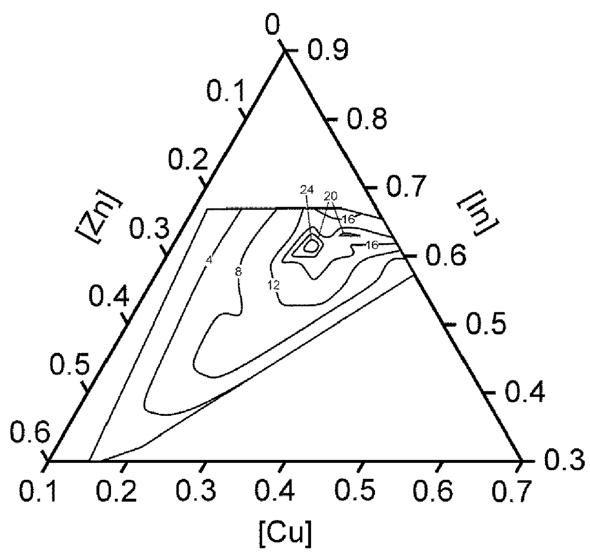


**FIG. 2**

EP 3 162 874 A1

**Description**

TECHNICAL FIELD

The present invention relates to nanocrystalline materials with the luminescent properties which can be used in quantum dot LED devices or the like. It furthermore relates to a methods of making nanocrystalline materials with such luminescent properties.

PRIOR ART

Semiconductor colloidal nanocrystals with luminescent properties (also known as quantum dots) are interesting materials for many applications, are for example already currently used in high-definition televisions and color e-readers, and will most likely also be used for cell phones and computer displays in the near future. These luminescent nanocrystalline materials are also of interest in the solid-state lighting industry as replacements for expensive red and green phosphors and to the medical industry as luminescent probes. All these applications rely on the luminescent efficiency of the semiconductor nanocrystalline materials, i.e. their efficiency in emitting light when excited by a photon or electron-hole pair.

In current commercial devices, for these applications CdSe based materials are commonly used. Academic and industrial research has driven luminescence efficiencies of these materials up to 95% and more, but these systems are toxic due to the cadmium content. Regulations of production or sale of products containing cadmium presents a possible risk for industry, if not now, surely for the future. There is therefore large interest in cadmium-free luminescent nanocrystalline materials with high luminescent efficiency and reliable production availability for the above-mentioned applications and other fields. Multicomponent I-II-III-VI group semiconductor quantum dots are considered as potential replacements for the pure CdSe quantum dot materials, not only reducing the toxicity of colloidal nanocrystals, but also providing comparable luminescence efficiencies over a broad spectral range. In addition to offering cadmium free emitters this proposed group of materials enables the emission wavelength to be controlled by composition in addition to size. For certain applications, for example involving electrical excitation of nanocrystals in a light-limiting field effect transistor, it can be advantageous to change the emission wavelength independent of nanocrystal size. This is because the mobility of a solid composed of nanocrystals is strongly dependent on nanocrystal size. In designing a device, it is important to be able to control emission wavelength independently of mobility.

On other hand, a synthesis with predictable composition control over luminescing multicomponent I-II-III-VI quantum dots remains a striking challenge, frequently involving multiple-step cation-exchange protocols or necessity of in-lab synthesis of several metal precursors prior the synthesis of I-II-III-VI quantum dots. The development of fast and reproducible, one-step synthesis of I-II-III-VI quantum dots, which uses only commercially available precursors, is highly advantageous for practical industrial applications, where large quantities of quantum dots will be required.

US 8,409,473 as well as CN 103589427, CN 103265948 and CN 102676162 generally disclose the possibility of using multicomponent I-II-III-VI group semiconductor particles without however specifying compositional ranges where optimum properties can be achieved. If at all, only proportions are indicated and worked where the constituents of the groups I-II-III are equally distributed in atomic proportions.

CN 102154007 discloses multicomponent I-II-III-VI group semiconductor materials which are however containing gallium and comprise small proportions of indium, and no information is given correlating the photoluminescence efficiency and the atomic proportions in the material.

EP 2879211 A1 discloses the preparation method of nanocrystals using organometallic amide, at which conditions the metallic sources are reduced to metallic nanoparticles. However, examples of EP 2879211 A1 do not consider the use of chalcogenides (i.e., S, Se, and Te), nor luminescent quantum dots. The examples there are limited to bimetallic Sn-containing two-component products which are to be post-synthetically oxidized to compositions $SnM_xO_y$.

SUMMARY OF THE INVENTION

It is the object of the present invention to provide novel luminescent nanocrystalline I-II-III-VI group materials, in particular intended as a replacement for the presently available luminescent nanocrystalline materials. The proposed methods shall have a high photoluminescent efficiency, be available by an efficient and reliable one-step production process, and shall be of low toxicity. The materials according to the invention enable a notable improvement of luminescence properties of such multicomponent semiconductor nanocrystals. They also allow a complete or essentially complete omission of the highly toxic cadmium in these materials. Due to the available reduced toxicity and the high luminescence efficiency the materials are highly attractive for lightning technologies (LED, displays) and medicine (bio-applications of quantum dots).

As concerns the proposed nanocrystalline I-II-III-VI group materials with luminescent properties it is demonstrated that there is a composition dependence of photoluminescence efficiency. Furthermore, for the claimed composition range the highest luminescence quantum yields can be achieved. Furthermore a new production method is proposed involving an amide superbase that controls in a predictable manner the composition of the resulting multicomponent nanoparticles, i.e. the proportion of the I, II, and III group atoms in the resulting I-II-III-VI nanocrystalline particles.

More specifically, the present invention proposes a new nanocrystalline particulate material with luminescent properties having the following composition:

$$M^{I}_{a}M^{II}_{b}M^{III}_{c}M^{VI}$$

In this definition, $M^{I}$ is a cation selected from the group IB in the periodic table, and is specifically selected from the group consisting of: Cu, Ag, and combinations thereof. Furthermore $M^{II}$ is a cation selected from the group IIB from the periodic table, and is specifically selected from the group consisting of: Zn, Cd, and combinations thereof.

$M^{III}$ is selected from the group IIIA of the periodic table, and is specifically selected to be In only.

$M^{VI}$ is a chalcogen source, so an element from the group VIA of the periodic table, specifically selected from the group consisting of: Se, Te and combinations thereof.

The parameters a, b, and c designate the atomic proportions within $M^{I}$, $M^{II}$, and $M^{III}$ and the sum of a, b and c is equal to 1 (i.e. a+b+c=1). The corresponding coefficient for $M^{VI}$ in this formula is 1.

Only for particular ranges for a, b, and c one notices an unexpectedly enhanced luminescence, in particular photoluminescence. More specifically, only if these parameters are chosen as follows:

a is in the range of 0.22-0.35;
b is in the range of 0.0003-0.2;
c is in the range of 0.52-0.66.

In the detailed specification given below it is demonstrated that within this composition range for I-II-III-VI group semiconductor nanocrystals, the luminescence efficiency is the highest. In the following it is shown that the luminescence efficiency of these quaternary semiconductor quantum dot systems is a well characterizing function of the composition, with a narrow optimum range defined in terms of the 3 parameters a-c as given above.

To optimize the photoluminescence properties of multicomponent semiconductor quantum dots, a method for composition control is crucial. Furthermore, to be industrially relevant, such a method must be fast and reliable, one-step protocol, which uses commercially available chemicals. A corresponding new and inventive method for making such systems, but also more general systems, is furthermore proposed and will be outlined further below. The general strategy is to employ a synthesis involving an amide superbase that controls the composition of these multicomponent semiconductor nanocrystals with more than 3 elements in their structure in a very efficient and predictable fashion.

As pointed out above, one of the concerns with the existing materials is the presence of cadmium for its toxicity. Correspondingly therefore according to a 1st preferred embodiment within $M^{II}$ the atomic proportion of Cd with respect to the total of $M^{II}$ taken as 1 is less than 0.5, preferably less than 0.1, wherein most preferably the material is free from Cd (meaning that $M^{II}$ is selected to be Zn).

Particularly good results are obtainable according to yet another preferred embodiment, if within $M^{I}$ the atomic proportion of Ag with respect to the total of $M^{I}$ taken as 1 is less than 0.5, preferably less than 0.1, wherein most preferably the material is free from Ag (meaning that $M^{I}$ is selected to be Cu).

In addition to that or alternatively, particularly good results are obtainable if within $M^{VI}$ the atomic proportion of Te with respect to the total of $M^{VI}$ taken as 1 is less than 0.5, preferably less than 0.1, wherein most preferably the material is free from Te (meaning that $M^{VI}$ is selected to be Se).

Particularly high photoluminescence quantum yields can be achieved according to yet another preferred embodiment if the composition is chosen as follows:

a is in the range of 0.25-0.33, preferably in the range of 0.26-0.29;
and/or wherein b is in the range of 0.05-0.18, preferably in the range of 0.08-0.15.
and/or wherein c is in the range of 0.55-0.65, preferably in the range of 0.60-0.64;

As pointed out, the particles with the above defined composition may have an additional, preferably fully covering shell layer, which typically has a thickness of 1-4 atom layers. Correspondingly according to yet another preferred embodiment, the proposed particulate material is surrounded by a (protective) shell layer, preferably by a crystalline shell layer, wherein preferably this shell layer has a thickness in the range of 0.25-1 nm, more preferably in the range of 0.25-0.5 nm. The material of said shell coating layer can be selected from the group consisting of ZnS, CdS, CdSe, ZnSe. Such a shell layer can be applied to the nanoparticles by methods known in the art, by a subsequent deposition of the shell layer after initial preparation of the core nanoparticles (see e.g. Danek, Michal, et al. "Synthesis of luminescent

thin-film CdSe/ZnSe quantum dot composites using CdSe quantum dots passivated with an overlayer of ZnSe." Chemistry of Materials 8.1 (1996): 173-180).

In relation with such a shell layer it is to be pointed out that the compositional definition as given above with a-c relates to the particle without the shell layer.

The proposed material can be provided in the form of a powder, of a colloidal system, or also embedded in a polymer matrix. The individual particles according to a preferred embodiment have a mean particle diameter (D) in the range of 1-25 nm, preferably in the range of 2-10 nm, most preferably in the range of 2-6 nm. These values apply for the situation where there is an additional shell layer or where there is no additional shell layer. According to a particularly preferred embodiment, the proposed material is $Cu_aZn_bIn_cSe$ with a in the range of 0.26-0.29, b in the range of 0.08-0.15 and c in the range of 0.60-0.64. For this particular choice of the composition an enhanced photoluminescence quantum yield is observed. For this range of compositions, the materials preferably have a photoluminescence quantum yield of at least 16%, preferably of at least 20%, most preferably of at least 24%, these values being without an additional shell layer. In case of an additional protective shell layer, these values are boosted and the luminescence efficiency can be more than 80%.

As pointed out above, the present invention furthermore relates to a method for the preparation of this type of materials in the form of nanoparticles. More specifically, according to this invention a method for the preparation of a nanocrystalline particulate material, preferably with luminescent properties, and preferably of the type as specifically defined above, having the following composition:

$$M^{I}_{a}M^{II}_{b}M^{III}_{c}M^{VI}$$

wherein

$M^{I}$ is selected from the group consisting of: Cu, Ag, Au and combinations thereof;
$M^{II}$ is selected from the group consisting of: Zn, Cd, Hg and combinations thereof;
$M^{III}$ is selected to be Al, Ga, In, Tl and combinations thereof;
$M^{VI}$ is selected from the group consisting of: Se, S, Te and combinations thereof;
and wherein a, b, and c designate the atomic proportions within $M^{I}$, $M^{II}$, and $M^{III}$ and the sum of a, b and c is equal to 1.

According to the proposed method as starting materials the cations $M^{I}$, $M^{II}$, and $M^{III}$ are provided as salts dissolved in a solvent. This is preferably carried out in a suitable polar solvent such as tri-n-octylphosphine to provide for a homogeneous solution, e.g. at an elevated temperature of above 200°C, preferably in the range of 260-310°C.

Further a superbase is added (after dissolution of the salts), and the chalcogen source for $M^{VI}$ is provided (again after dissolution of the salts, preferably the chalcogen source for $M^{VI}$ is added together with the super base). Preferably the chalcogen source for $M^{VI}$ is added in the form of an alkylphosphine precursor compound, e.g. Se:tri-n-octylphosphine adduct. Subsequently the resulting material is isolated in particulate form from suspension, preferably via precipitation upon cooling. This can be followed by further purification steps like filtering, decanting, washing, sedimenting, centrifuging etc.

The following reaction scheme indicates the reaction pathway for the case of $Cu_aZn_bIn_cSe$ quantum dots, which is assumed to be taken by such an amide promoted reaction including the formation of highly reactive metal-amide intermediate compounds of $M^{I}$, $M^{II}$, and $M^{III}$:

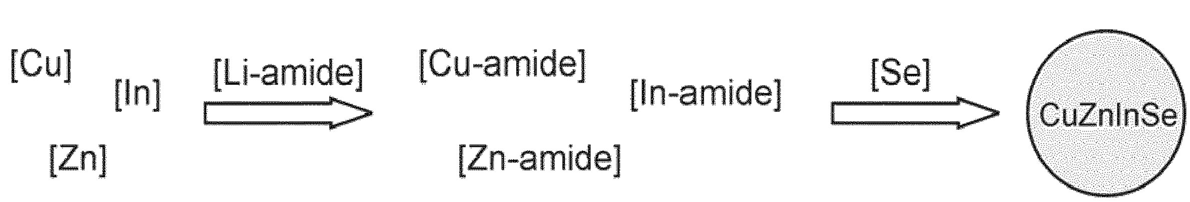


According to a preferred embodiment of this method, the starting materials for the cations $M^{I}$, $M^{II}$, and $M^{III}$ are provided as halogenide salts, preferably chloride, bromide or iodide salts, most preferably chloride salts.

According to another preferred embodiment, the starting materials for the cations $M^{I}$, $M^{II}$, and $M^{III}$ are provided in an organic polar solvent, preferably selected as an alkylphosphine solvent, most preferably selected to be tri-n-octylphosphine.

According to yet another preferred embodiment of the method, the superbase is a metal amide in a solvent, preferably an organic polar solvent, most preferably selected as an alkylphosphine and/or alkylamine solvent, including tri-n-octylphosphine or a mixture thereof.

According to another preferred embodiment, the metal amide providing the superbase is an organo-lithium

amide, organo-sodium amide, or a mixture thereof. These systems can be selected but not limited to the group consisting of Li and/or Na amides, such as bis(trimethylsilyl)amide ($N(SiMe_3)_2$), dimethylamide, diethylamide, diisopropylamide and combinations/mixtures thereof.

In order to provide for superbasic conditions, the superbase is preferably added in an at least 2 times excess, most preferably in an at least 5 times excess, with respect to the cation concentration of the sum of $M^I$, $M^{II}$, and $M^{III}$.

For the creation of nanocrystalline particulate material of a given predetermined desired composition defined by the values of a, b, and c, according to a preferred embodiment the concentrations of the starting materials for $M^I$, $M^{II}$, and $M^{III}$ in particular in the form of chloride salts, is selected in a calculated manner. As a matter of fact it was found out that also for this compound comprising at least 4 different atomic constituents under the chosen reaction conditions only the starting ratios of the cations determine the final composition, which is in contrast to previously reported synthetic pathways. This allows for tailored production of various compositions. This tailored synthesis layout is preferably done in that in this calculation the concentrations for a desired set of a-c are selected such that the following conditions are fulfilled (this representation being given for the choice of the anion for the $M^I$, $M^{II}$, and $M^{III}$ to be chloride, however being applicable equivalently to other choices of anions):

$$a = A \cdot [CuCl]_0 \cdot [InCl_3]_0^{0.67};$$

$$b = B \cdot [ZnCl_2]_0 \cdot [CuCl]_0;$$

$$c = C \cdot [InCl_3]_0^{0.67}$$

with given constants A, B, and C determined based on the specific selection of $M^I$, $M^{II}$, and $M^{III}$ and normally also $M^{VI}$, and optionally also based on the chosen solvent(s) and/or superbase(s).

More generally speaking, for the general composition $M^I_aM^{II}_bM^{III}_cM^{VI}$, where in $M^I$ is an element selected from the group IB, $M^{II}$ is an element selected from the group IIB, $M^{III}$ is an element selected from the group IIIA, and $M^{VI}$ is an element selected from the group VIA, the required concentrations for a desired set of a-c are selected such that the following conditions are fulfilled:

$$a = A \cdot [M^IE]_0 \cdot [M^{III}E_3]_0^{0.67};$$

$$b = B \cdot [M^{II}E_2]_0 \cdot [M^IE]_0;$$

$$c = C \cdot [M^{III}E_3]_0^{0.67};$$

where E is halogen element to be selected from the group VIIA from Cl, Br, or I.

The constants A, B, and C, are preferably determined based on the specific selection of $M^I$, $M^{II}$, $M^{III}$ and $M^{VI}$, the chosen halogens E, and optionally also based on the chosen solvents and/or superbase(s).

According to a preferred embodiment, when concentrations of $M^IE$, $M^{II}E_2$, and $M^{III}E_3$ are given in mol/L, A is selected in the range of 22-31, preferably 24.5-28; B is selected in the range of 105-195, preferably 135-170; C is selected in the range of 1.2-6.3, preferably 2-4. Preferably for the system CuZnInSe and when concentrations of $M^I$, $M^{II}$, and $M^{III}$ chlorides (i.e. E is Cl) are given in mol/L, these parameters are chosen to be as follows:

A is selected in the range of 24.5-25.5, preferably at or around 24.9;
B is selected in the range of 135-145, preferably at or around 137.8;
C is selected in the range of 3.0-3.5, preferably at or around 3.3.

Preferably for the system AgZnInSe and when concentrations of $M^I$, $M^{II}$, and $M^{III}$ iodides (i.e. E is I) are given in mol/L, these parameters are chosen to be as follows:

A is selected in the range of 25-29, preferably at or around 27;
B is selected in the range of 145-175, preferably at or around 160;
C is selected in the range of 1.2-2.8, preferably at or around 2.

Preferably for the systems CuZnInTe, CuCdInSe, and CuCdInTe and when concentrations of $M^I$, $M^{II}$, and $M^{III}$ chlorides (i.e. E is Cl) are given in mol/L, these parameters are chosen to be as follows:

A is selected in the range of 22-28;
B is selected in the range of 105-170;
C is selected in the range of 2.1-4.5.

Preferably for the systems CuZnInSe, CuZnInTe, CuCdInSe, CuCdInTe AgZnInTe, AgCdInSe, and AgCdInTe and when concentrations of $M^I$, $M^{II}$, and $M^{III}$ iodides or bromides (i.e. E is I or Br) are given in mol/L and for the system AgZnInSe and when concentrations of $M^I$, $M^{II}$, and $M^{III}$ bromides (i.e. E is Br) are given in mol/L, these parameters are chosen to be as follows:

A is selected in the range of 22-31;
B is selected in the range of 105-195;
C is selected in the range of 1.2-6.3.

Furthermore the present invention relates to the use of a material as detailed above in a semiconductor device, preferably in an optical semiconductor device, and in particular for the uses as outlined in the introduction of this document.

Furthermore the present invention relates to the use of a superbase for the preparation of a nanocrystalline particulate material, preferably with luminescent properties, having the following composition:

$$M^I_aM^{II}_bM^{III}_cM^{VI}$$

wherein $M^I$ is selected from the group consisting of: Cu, Ag, Au and combinations thereof; $M^{II}$ is selected from the group consisting of: Zn, Cd, Hg and combinations thereof;
$M^{III}$ is selected to be Al, Ga, In, Tl and combinations thereof; $M^{VI}$ is selected from the group consisting of: Se, S, Te and combinations thereof; and wherein a, b, and c designate the atomic proportions within $M^I$, $M^{II}$, and $M^{III}$ and the sum of a, b and c is equal to 1. Also here, preferably the super base is a metal amide in a solvent, preferably an organic polar solvent, most preferably selected as an alkylphosphine and/or alkylamine solvent, including tri-n-octylphosphine or a mixture thereof, and wherein preferably the metal amide is an organo-lithium amide and/or organo-sodium amide, in particular selected but not limited to the group consisting of Li and/or Na amides, such as bis(trimethylsilyl)amide ($N(SiMe_3)_2$), dimethylamide, diethylamide, diisopropylamide and combinations thereof. Again preferably the super base is added in an at least 2 times excess, most preferably in an at least 5 times excess, with respect to the cation concentration of the sum of $M^I$, $M^{II}$, and
$M^{III}$.

Further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1 shows in filled gray circles the nominal composition, calculated as a ratio between starting chloride salt concentrations, where [Cu] = [CuCl]/([CuCl]+[$ZnCl_2$]+[$InCl_3$]), [Zn] = [$ZnCl_2$]/([CuCl]+[$ZnCl_2$]+[$InCl_3$]), [In] = [$InCl_3$]/([CuCl]+[$ZnCl_2$]+[$InCl_3$]); in filled black triangles the measured composition of CZISe nanocrystals, measured by energy dispersive X-ray spectroscopy, where [Cu] = a, [Zn] = b, [In] = c in the formula $Cu_aZn_bIn_cSe$ and a+b+c=1; in empty black circles the corresponding values predicted by a model based on the nominal composition, where [Cu] = a, [Zn] = b, [In] = c in the formula $Cu_aZn_bIn_cSe$ and a+b+c=1;

Fig. 2 shows a photoluminescence efficiency plot, mapped as a function of the measured composition of the nanoparticles, where [Cu] = a, [Zn] = b, [In] = c in the formula $Cu_aZn_bIn_cSe$ and a+b+c=1; numbers of contours are photoluminescence quantum yield in %; mean diameter of nanocrystals, D, remains 3.3 nm for each composition (see Table 2)

Fig. 3 shows emission spectra of the proposed nanocrystalline quantum dots before (dashed line) and after (solid line) ZnS shell growth; and

Fig. 4 shows typical transmission electron microscopy image of CZISe nanocrystals with the mean diameter D = 3.3 nm.

DESCRIPTION OF PREFERRED EMBODIMENTS

**Methods:**

Syntheses of CuZnInSe (CZISe) and other I-II-III-VI nanocrystals were performed using air-less Schlenk line set-up. All chemicals, precursor solutions, and nanocrystals samples were stored and handled air/water-free in the $N_2$-filled glovebox. Photoluminescence spectra were taken exciting the colloidal solutions of CZISe NCs with 405 nm CW laser and recording the data with the Ocean Optics QE65000 spectrometer. Photoluminescence quantum yield set-up consisted form integrating sphere, coupled 532 nm CW laser, and the Ocean Optics QE65000 spectrometer. Rhodamine B was used as internal reference. Energy dispersive X-ray measurements were performed on FEI Quanta 200 FEG electron microscope, transmission electron microscopy on Technai F30 microscope.

**General example of CuZnInSe synthesis:**

In a typical synthesis, calculated amounts of CuCl, $ZnCl_2$, and $InCl_3$ (see Table 1) were weighted and dissolved in 6 mL of tri-n-octylphosphine (TOP) inside a $N_2$-filled glovebox. The solution was then loaded air-free in a 25 mL three neck flask using Schlenk line technique. The reaction solution was then additionally purified during 30 min at 100°C under vacuum. Meanwhile, an injection mixture of 0.316 g Se, 1.002 g $LiN(SiMe_3)_2$ and 6 mL TOP was prepared in the glove box. The injection mixture was swiftly added to the reaction solution at 300°C and 1 bar $N_2$ atmosphere. Upon injection, the reaction solution immediately turns turbid, indicating formation of white LiCl byproducts. At the same time, overall color of the reaction slurry gradually changed to orange, red and deep-brown, attributed to the nucleation and growth of CuZnInSe nanocrystals (CZISe NCs). Reaction was terminated by fast cooling to room temperature 40 s after injection. The overall volume of the reaction mixture before purification was 12.5 mL; this value was used to calculate molar concentrations of CuCl, $ZnCl_2$, and $InCl_3$ (see Table 1)

Purification of CZISe NCs is based on immiscibility of TOP and methanol. The as-synthesized reaction solution was mixed with same volume of toluene and 8 times the volume of methanol, resulting in phase separation. The mixture was vigorously shaken for 1 min and centrifuged at 6000 rpm for 3 min. An upper fraction (methanol) was decanted, and the purification step was repeated. After these two washing rounds, the TOP-rich solution of CZISe NCs became optically clear, indicating a removal of most of the methanol-soluble LiCl byproducts. CZISe NCs can then be washed via conventional solvent-nonsolvent protocol, using e.g. toluene and ethanol-methanol (1:1), respectively. Syntheses of other I-II-III-VI nanocrystals were carried out in similar way to CZISe NCs, taking appropriate metal halogenide precursors and adjusting injection temperature and time of reaction. Purification of other I-II-III-VI nanocrystals was performed in complete analogy to the CZISe NCs.

**Calculations of predicted compositions:**

Compositions of CZISe NCs ($Cu_aZn_bIn_cSe$, with a+b+c=1) can be calculated via

$$a = A \cdot [CuCl]_0 \cdot [InCl_3]_0^{0.67} ;$$

$$b = B \cdot [ZnCl_2]_0 \cdot [CuCl]_0 ;$$

$$c = C \cdot [InCl_3]_0^{0.67}$$

where $[CuCl]_0$, $[ZnCl_2]_0$, $[InCl_3]_0$ are the starting molar concentrations of metal chlorides, in mol/L, and A, B, C - prefactors (for CZISe NCs, A = 24.9, B = 137.8, C = 3.3).

To develop a model, 25 separate reactions were performed. Changing only amounts of introduced metal chlorides, but keeping reaction time, reaction temperature and amounts of all other chemicals, it is ensured to keep constant a mean diameter of resulting CZISe NCs to be D = 3.3 nm (see Fig. 4). Starting masses of CuCl, $ZnCl_2$, and $InCl_3$ are listed in Table 1. The molar concentrations are calculated, taking into account the total volume of reaction mixture to be 12.5 mL, as stated above. Nominal compositions of $Cu_aZn_bIn_cSe$ nanocrystals (where a+b+c=1) are deduces as ratios between molar concentrations.

The composition of each sample is measured with Energy dispersive X-ray spectroscopy, deriving measured (i.e., experimentally determined) compositions of $Cu_aZn_bIn_cSe$ nanocrystals, where a+b+c=1. Finally, predicted compositions of $Cu_aZn_bIn_cSe$ nanocrystals (a+b+c=1) were calculated using the above formulae. The composition of $Cu_aZn_bIn_cSe$ nanocrystals were found to be proportional to the power functions of starting molar concentrations of metal salts or a product of such power functions (see formulae above). Table 2 listed nominal, measured, and predicted compositions for all samples.

**Experimental results:**

Table 1. Masses of metal chloride salts in starting reaction mixture and calculated molar concentrations and calculated nominal compositions (i.e., molar ratios between metal salts). Results are presented for CuZnInSe synthesis.

| | Starting mass of metal salts, in g | | | Starting concentration of metal salts, in mol/L | | | Nominal composition of $Cu_aZn_bIn_cSe$ nanocrystals | | |
|---|---|---|---|---|---|---|---|---|---|
| | CuCl | $ZnCl_2$ | $InCl_3$ | CuCl | $ZnCl_2$ | $InCl_3$ | a | b | c |
| Sample 1 | 0.139 | 0 | 0.133 | 0.112 | 0 | 0.048 | 0.7 | 0 | 0.3 |
| Sample2 | 0.119 | 0 | 0.177 | 0.096 | 0 | 0.064 | 0.6 | 0 | 0.4 |
| Sample3 | 0.104 | 0 | 0.21 | 0.084 | 0 | 0.076 | 0.525 | 0 | 0.475 |
| Sample4 | 0.099 | 0 | 0.221 | 0.08 | 0 | 0.08 | 0.5 | 0 | 0.5 |
| Sample5 | 0.099 | 0 | 0.221 | 0.08 | 0 | 0.08 | 0.5 | 0 | 0.5 |
| Sample6 | 0.079 | 0 | 0.265 | 0.064 | 0 | 0.096 | 0.4 | 0 | 0.6 |
| Sample7 | 0.089 | 0.014 | 0.221 | 0.072 | 0.008 | 0.08 | 0.45 | 0.05 | 0.5 |
| Sample8 | 0.079 | 0.014 | 0.243 | 0.064 | 0.008 | 0.088 | 0.4 | 0.05 | 0.55 |
| Sample9 | 0.069 | 0.014 | 0.265 | 0.056 | 0.008 | 0.096 | 0.35 | 0.05 | 0.6 |
| Sample 10 | 0.079 | 0.02 | 0.232 | 0.064 | 0.012 | 0.084 | 0.4 | 0.075 | 0.525 |
| Sample 11 | 0.099 | 0.027 | 0.177 | 0.08 | 0.016 | 0.064 | 0.5 | 0.1 | 0.4 |
| Sample 12 | 0.089 | 0.027 | 0.199 | 0.072 | 0.016 | 0.072 | 0.45 | 0.1 | 0.45 |
| Sample 13 | 0.079 | 0.027 | 0.221 | 0.064 | 0.016 | 0.08 | 0.4 | 0.1 | 0.5 |
| Sample 14 | 0.069 | 0.027 | 0.243 | 0.056 | 0.016 | 0.088 | 0.35 | 0.1 | 0.55 |
| Sample 15 | 0.059 | 0.027 | 0.265 | 0.048 | 0.016 | 0.096 | 0.3 | 0.1 | 0.6 |
| Sample 16 | 0.119 | 0.055 | 0.088 | 0.096 | 0.032 | 0.032 | 0.6 | 0.2 | 0.2 |
| Sample 17 | 0.099 | 0.055 | 0.133 | 0.08 | 0.032 | 0.048 | 0.5 | 0.2 | 0.3 |
| Sample 18 | 0.089 | 0.055 | 0.155 | 0.072 | 0.032 | 0.056 | 0.45 | 0.2 | 0.35 |
| Sample 19 | 0.079 | 0.055 | 0.177 | 0.064 | 0.032 | 0.064 | 0.4 | 0.2 | 0.4 |
| Sample20 | 0.069 | 0.055 | 0.199 | 0.056 | 0.032 | 0.072 | 0.35 | 0.2 | 0.45 |
| Sample21 | 0.059 | 0.055 | 0.221 | 0.048 | 0.032 | 0.08 | 0.3 | 0.2 | 0.5 |
| Sample22 | 0.099 | 0.082 | 0.088 | 0.08 | 0.048 | 0.032 | 0.5 | 0.3 | 0.2 |

(continued)

| | Starting mass of metal salts, in g | | | Starting concentration of metal salts, in mol/L | | | Nominal composition of $Cu_aZn_bIn_cSe$ nanocrystals | | |
|---|---|---|---|---|---|---|---|---|---|
| | CuCl | $ZnCl_2$ | $InCl_3$ | CuCl | $ZnCl_2$ | $InCl_3$ | a | b | c |
| Sample23 | 0.069 | 0.082 | 0.155 | 0.056 | 0.048 | 0.056 | 0.35 | 0.3 | 0.35 |
| Sample24 | 0.04 | 0.082 | 0.221 | 0.032 | 0.048 | 0.08 | 0.2 | 0.3 | 0.5 |
| Sample25 | 0.03 | 0.082 | 0.243 | 0.024 | 0.048 | 0.088 | 0.15 | 0.3 | 0.55 |

Table 2: Nominal compositions, measured compositions of obtained $Cu_aZn_bIn_cSe$ nanocrystals and compositions predicted by a model. Photoluminescence (PL) quantum yield of obtained $Cu_aZn_bIn_cSe$ quantum dots, in %.

| | Nominal composition of $Cu_aZn_bIn_cSe$ nanocrystals | | | Measured composition of $Cu_aZn_bIn_cSe$ nanocrystals | | | Predicted composition of $Cu_aZn_bIn_cSe$ nanocrystals | | | PL quantum yield, in % |
|---|---|---|---|---|---|---|---|---|---|---|
| | a | b | c | a | b | c | a | b | c | |
| Sample1 | 0.7 | 0 | 0.3 | 0.405 | 0 | 0.595 | 0.365 | 0 | 0.431 | 3.7 |
| Sample2 | 0.6 | 0 | 0.4 | 0.426 | 0 | 0.574 | 0.379 | 0 | 0.523 | 4 |
| Sample3 | 0.525 | 0 | 0.475 | 0.388 | 0 | 0.612 | 0.372 | 0 | 0.587 | 6.6 |
| Sample4 | 0.5 | 0 | 0.5 | 0.365 | 0 | 0.635 | 0.367 | 0 | 0.608 | 15.9 |
| Sample5 | 0.5 | 0 | 0.5 | 0.356 | 0 | 0.644 | 0.367 | 0 | 0.608 | 10 |
| Sample6 | 0.4 | 0 | 0.6 | 0.347 | 0 | 0.653 | 0.332 | 0 | 0.686 | 6.6 |
| Sample7 | 0.45 | 0.05 | 0.5 | 0.297 | 0.058 | 0.645 | 0.33 | 0.079 | 0.608 | 18.4 |
| Sample8 | 0.4 | 0.05 | 0.55 | 0.305 | 0.062 | 0.633 | 0.313 | 0.071 | 0.648 | 22 |
| Sample9 | 0.35 | 0.05 | 0.6 | 0.285 | 0.046 | 0.669 | 0.29 | 0.062 | 0.686 | 19 |
| Sample10 | 0.4 | 0.075 | 0.525 | 0.293 | 0.087 | 0.62 | 0.303 | 0.106 | 0.628 | 19.3 |
| Sample11 | 0.5 | 0.1 | 0.4 | 0.33 | 0.14 | 0.53 | 0.316 | 0.176 | 0.523 | 14.6 |
| Sample12 | 0.45 | 0.1 | 0.45 | 0.31 | 0.136 | 0.554 | 0.308 | 0.159 | 0.566 | 13.8 |
| Sample13 | 0.4 | 0.1 | 0.5 | 0.273 | 0.106 | 0.621 | 0.293 | 0.141 | 0.608 | 28.7 |
| Sample14 | 0.35 | 0.1 | 0.55 | 0.277 | 0.106 | 0.617 | 0.274 | 0.123 | 0.648 | 25.6 |
| Sample15 | 0.3 | 0.1 | 0.6 | 0.256 | 0.09 | 0.654 | 0.249 | 0.106 | 0.686 | 13 |
| Sample16 | 0.6 | 0.2 | 0.2 | 0.205 | 0.472 | 0.323 | 0.238 | 0.423 | 0.329 | 1.4 |
| Sample17 | 0.5 | 0.2 | 0.3 | 0.254 | 0.331 | 0.415 | 0.26 | 0.353 | 0.431 | 5.7 |
| Sample18 | 0.45 | 0.2 | 0.35 | 0.251 | 0.301 | 0.448 | 0.26 | 0.317 | 0.478 | 6.3 |
| Sample19 | 0.4 | 0.2 | 0.4 | 0.25 | 0.261 | 0.489 | 0.253 | 0.282 | 0.523 | 8.1 |
| Sample20 | 0.35 | 0.2 | 0.45 | 0.253 | 0.243 | 0.504 | 0.239 | 0.247 | 0.566 | 11.1 |
| Sample21 | 0.3 | 0.2 | 0.5 | 0.23 | 0.185 | 0.585 | 0.22 | 0.212 | 0.608 | 12.9 |
| Sample22 | 0.5 | 0.3 | 0.2 | 0.151 | 0.552 | 0.297 | 0.198 | 0.529 | 0.329 | 0.7 |
| Sample23 | 0.35 | 0.3 | 0.35 | 0.2 | 0.366 | 0.434 | 0.202 | 0.37 | 0.478 | 3.1 |
| Sample24 | 0.2 | 0.3 | 0.5 | 0.133 | 0.297 | 0.57 | 0.147 | 0.212 | 0.608 | 1.7 |
| Sample25 | 0.15 | 0.3 | 0.55 | 0.145 | 0.207 | 0.648 | 0.117 | 0.159 | 0.648 | 0.3 |

Figure 1 graphically shows the experimental results, presented in Table 2. In the filled gray circles the nominal compositions, and in filled black triangles the measured compositions of $Cu_aZn_bIn_cSe$ samples are indicated. Corre-

sponding to the chemistry law of mass action, the amounts of deposited $M^I$, $M^{II}$, and $M^{III}$ (i.e., Cu, Zn, and In for this case) is found to be proportional to the power functions of starting molar concentrations of metal salts or a product of such power functions (see formulae above). This allows us to define the prefactors A, B, C and predict the composition of obtained $Cu_aZn_bIn_cSe$ quantum dots very accurately with the error (SD, standard deviation) not exceeding 4% for any of metal constituents or for the model as a whole (if compared calculated compositions with respect to measured ones). In fact, SD for Cu amount is 1.4%, SD for Zn amount is 2.0%, and SD for In amount is 3.2%. SD for all metals and all compositions is 2.4% only. Predicted compositions of $Cu_aZn_bIn_cSe$ quantum dots are depicted as empty black circles in Figure 1. Furthermore, the composition model shows its applicability for other I-II-III-VI quantum dots and for the general composition $M^I_aM^{II}_bM^{III}_cM^{VI}$, where in $M^I$ is an element selected from the group IB, $M^{II}$ is an element selected from the group IIB, $M^{III}$ is an element selected from the group IIIA, and $M^{VI}$ is an element selected from the group VIA, can be described as:

$$a = A \cdot [M^I E]_0 \cdot [M^{III} E_3]_0^{0.67};$$

$$b = B \cdot [M^{II} E_2]_0 \cdot [M^I E]_0;$$

$$c = C \cdot [M^{III} E_3]_0^{0.67};$$

where E is halogen element to be selected from the group VIIA from Cl, Br, or I.

As pointed out above, prefactors A, B, and C are to a certain extent dependent on the choice of $M^I$, $M^{II}$, and $M^{III}$ constituents and whether chlorides, bromides or iodides salts of metals are used for the synthesis of I-II-III-VI nanocrystals.

Figure 2 plots the photoluminescence efficiency as a function of I-II-III-VI composition, presented for the case of $Cu_aZn_bIn_cSe$ quantum dots and for average diameter of the quantum dots (D) of 3.3 nm. A very well determined composition range where the photoluminescence efficiency is the highest is apparent from the Figure 2. The composition of $Cu_aZn_bIn_cSe$ quantum dots with enhanced photoluminescence is correspondent to the parameters a-c, chosen as claimed. Outside of this range the photoluminescence efficiency is significantly lower.

As pointed out above, the efficiency and correspondingly the photoluminescence intensity can be boosted by additionally providing a shell layer around these nanoparticles. In Figure 3 emission spectra of nanocrystals before (dashed line, given for $Cu_aZn_bIn_cSe$ quantum dots with the following composition a = 0.273, b = 0.106, c = 0.621) and after ZnS shell growth (solid line, again with the following composition of the core a = 0.273, b = 0.106, c = 0.621), with a ZnS shell layer thickness of about 0.5 nm, are indicated. Because the ZnS shell grows via cation-exchange mechanism, the mean diameter (D) of nanocrystals doesn't change significantly during Zn-shell coating and is equal 3.3 nm. Figure 4 represents the wide-range and high-resolution TEM images of $Cu_aZn_bIn_cSe$ quantum dots before the ZnS shell growth.

## Claims

**1.** Nanocrystalline particulate material with luminescent properties having the following composition:

$$M^I_aM^{II}_bM^{III}_cM^{VI}$$

wherein

$M^I$ is selected from the group consisting of: Cu, Ag, and combinations thereof;
$M^{II}$ is selected from the group consisting of: Zn, Cd, and combinations thereof;
$M^{III}$ is selected to be In;
$M^{VI}$ is selected from the group consisting of: Se, Te and combinations thereof; and
wherein a, b, and c designate the atomic proportions within $M^I$, $M^{II}$, and $M^{III}$ and the sum of a, b and c is equal to 1,
wherein a is in the range of 0.22-0.35;
b is in the range of 0.0003-0.2;
c is in the range of 0.52-0.66.

**2.** Material according to claim 1, wherein within $M^{II}$ the atomic proportion of Cd with respect to the total of $M^{II}$ taken as 1 is less than 0.5, preferably less than 0.1, wherein most preferably the material is free from Cd.

**3.** Material according to any of the preceding claims, wherein
a is in the range of 0.25-0.33, preferably in the range of 0.26-0.29;
and/or wherein b is in the range of 0.05-0.18, preferably in the range of 0.08-0.15; and/or wherein c is in the range of 0.55-0.65, preferably in the range of 0.60-0.64.

**4.** Material according to any of the preceding claims, wherein within $M^{I}$ the atomic proportion of Ag with respect to the total of $M^{I}$ taken as 1 is less than 0.5, preferably less than 0.1, wherein most preferably the material is free from Ag, and/or within $M^{VI}$ the atomic proportion of Te with respect to the total of $M^{VI}$ taken as 1 is less than 0.5, preferably less than 0.1, wherein most preferably the material is free from Te.

**5.** Material according to any of the preceding claims, wherein the material is in the form of particles with a mean particle diameter (D) in the range of 1-25 nm, preferably in the range of 2-10 nm, most preferably in the range of 2-6 nm.

**6.** Material according to any of the preceding claims, wherein the particulate material is surrounded by a shell layer, preferably by a crystalline shell layer, wherein preferably this shell layer has a thickness in the range of 0.25-1 nm, more preferably in the range of 0.25-0.5 nm, and wherein the material of said shell coating layer is preferably selected from the group consisting of ZnS, CdS, CdSe, ZnSe.

**7.** Material according to any of the preceding claims, wherein the material is $Cu_aIn_bZn_cSe$ with a in the range of 0.26-0.29, b in the range of 0.08-0.15 and c in the range of 0.60-0.64.

**8.** Material according to any of the preceding claims, wherein it has a photoluminescence quantum yield of at least 16%, preferably of at least 20%, most preferably of at least 24% or in case of an additional protective shell layer, the luminescence efficiency of more than 80%.

**9.** Method for the preparation of a nanocrystalline particulate material, preferably with luminescent properties, having the following composition:

$$M^{I}_{a}M^{II}_{b}M^{III}_{c}M^{VI}$$

wherein

$M^{I}$ is selected from the group consisting of: Cu, Ag, Au and combinations thereof; $M^{II}$ is selected from the group consisting of: Zn, Cd, Hg and combinations thereof;
$M^{III}$ is selected to be Al, Ga, In, Tl and combinations thereof;
$M^{VI}$ is selected from the group consisting of: Se, S, Te and combinations thereof; and
wherein a, b, and c designate the atomic proportions within $M^{I}$, $M^{II}$, and $M^{III}$ and the sum of a, b and c is equal to 1, preferably for the preparation of the material according to any of the preceding claims,
wherein as starting materials the cations $M^{I}$, $M^{II}$, and $M^{III}$ are provided as salts dissolved in a solvent,
wherein super base is added, and the chalcogen source for $M^{VI}$,
and wherein the resultant nanocrystalline particulate material is isolated, preferably via precipitation.

**10.** Method according to claim 9, wherein the starting materials for the cations $M^{I}$, $M^{II}$, and $M^{III}$ are provided as halogenide salts, preferably as chloride salts,
and/or wherein the starting materials for the cations $M^{I}$, $M^{II}$, and $M^{III}$ are provided in an organic polar solvent, preferably selected as an alkylphosphine or alkylamine solvent or a mixture thereof, most preferably selected to be tri-n-octylphosphine.

**11.** Method according to any of the preceding claims 9 or 10, wherein the super base is a metal amide in a solvent, preferably an organic polar solvent, most preferably selected as an alkylphosphine solvent, including tri-n-octylphosphine, and wherein preferably the metal amide is an organo-lithium amide and/or organo-sodium amide, in particular selected from the group consisting of Li and/or Na amides of bis(trimethylsilyl)amide ($N(SiMe_3)_2$), dimethylamide, diethylamide, diisopropylamide, and combinations/mixtures thereof,
and/or wherein preferably the super base is added in an at least 2 times or at least 5 times excess with respect to the cation concentration of the sum of $M^{I}$, $M^{II}$, and $M^{III}$.

**12.** Method according to any of the preceding claims 9-11, wherein for the creation of nanocrystalline particulate material of a given predetermined desired composition defined by the values of a, b, and c, the concentrations of the starting materials for $M^I$, $M^{II}$, and $M^{III}$, used in the form of the corresponding halogenides $M^IE$, $M^{II}E_2$, and $M^{III}E_3$, where E is a halogen element, wherein E is preferably chosen to be Cl, Br, or I or a combination thereof, is selected in a calculated manner, preferably such that the following conditions are fulfilled:

$$a = A \cdot [M^I E]_0 \cdot [M^{III} E_3]_0^{0.67};$$

$$b = B \cdot [M^{II} E_2]_0 \cdot [M^I E]_0;$$

$$c = C \cdot [M^{III} E_3]_0^{0.67};$$

with given constants A, B, and C, preferably determined based on the specific selection of $M^I$, $M^{II}$, $M^{III}$ and $M^{VI}$, the chosen halogens E, and optionally also based on the chosen solvents and/or superbase(s), wherein preferably, when concentrations of $M^IE$, $M^{II}E_2$, and $M^{III}E_3$ are given in mol/L,
A is selected in the range of 22-31, preferably 24.5-28;
B is selected in the range of 105-195, preferably 135-170;
C is selected in the range of 1.2-6.3, preferably 2-4.

**13.** Method according to claim 12, wherein
for the system $Cu_aZn_bIn_cSe$ and when concentrations of $M^IE$, $M^{II}E_2$, and $M^{III}E_3$ are given in mol/L and E is selected to be chlorine, the parameters A-C are chosen to be as follows:

A is selected in the range of 24.5-25.5, preferably at or around 24.9;
B is selected in the range of 135-145, preferably at or around 137.8;
C is selected in the range of 3.0-3.5, preferably at or around 3.3.
or wherein for the system AgZnInSe and when concentrations of $M^IE$, $M^{II}E_2$, and
$M^{III}E_3$ are given in mol/L and E is selected to be iodine, the parameters A-C are chosen to be as follows:
A is selected in the range of 25-29, preferably at or around 27;
B is selected in the range of 145-175, preferably at or around 160;
C is selected in the range of 1.2-2.8, preferably at or around 2.
or wherein for the systems CuZnInTe, CuCdInSe, and CuCdInTe and when concentrations of $M^IE$, $M^{II}E_2$, and $M^{III}E_3$ are given in mol/L and E is selected to be chlorine, the parameters A-C are chosen to be as follows:
A is selected in the range of 22-28;
B is selected in the range of 105-170;
C is selected in the range of 2.1-4.5.
or wherein for the systems CuZnInSe, CuZnInTe, CuCdInSe, CuCdInTe, AgZnInTe, AgCdInSe, and AgCdInTe and when concentrations of $M^IE$, $M^{II}E_2$,
and $M^{III}E_3$ are given in mol/L and E is selected to be iodine or bromine or a combination thereof, and for the system AgZnInSe and when concentrations of $M^IE$, $M^{II}E_2$, and $M^{III}E_3$ are given in mol/L and E is selected to be bromine, the parameters A-C are chosen to be as follows:
A is selected in the range of 22-31;
B is selected in the range of 105-195;
C is selected in the range of 1.2-6.3.

**14.** Use of a material according to any of the preceding claims 1-8 in a semiconductor device, preferably in an optical semiconductor device.

**15.** Use of a superbase for the preparation of a nanocrystalline particulate material, preferably with luminescent properties, having the following composition:

$$M^I_a M^{II}_b M^{III}_c M^{VI}$$

wherein

$M^I$ is selected from the group consisting of: Cu, Ag, Au and combinations thereof;
$M^{II}$ is selected from the group consisting of: Zn, Cd, Hg and combinations thereof;
$M^{III}$ is selected to be Al, Ga, In, Tl and combinations thereof;
$M^{VI}$ is selected from the group consisting of: Se, S, Te and combinations thereof; and
wherein a, b, and c designate the atomic proportions within $M^I$, $M^{II}$, and $M^{III}$ and the sum of a, b and c is equal to 1, wherein preferably the superbase is a metal amide in a solvent, preferably an organic polar solvent, most preferably selected as an alkylphosphine and/or alkylamine solvent, including tri-n-octylphosphine, or a mixture thereof and wherein preferably the metal amide is an organo-lithium amide and/or organo-sodium amide, in particular selected from the group consisting of Li and/or Na amides of bis(trimethylsilyl)amide ($N(SiMe_3)_2$), dimethylamide, diethylamide, diisopropylamide, and combinations/mixtures thereof,
and/or wherein preferably the super base is added in an at least 2 or at least 5 times excess with respect to the cation concentration of the sum of $M^I$, $M^{II}$, and $M^{III}$.

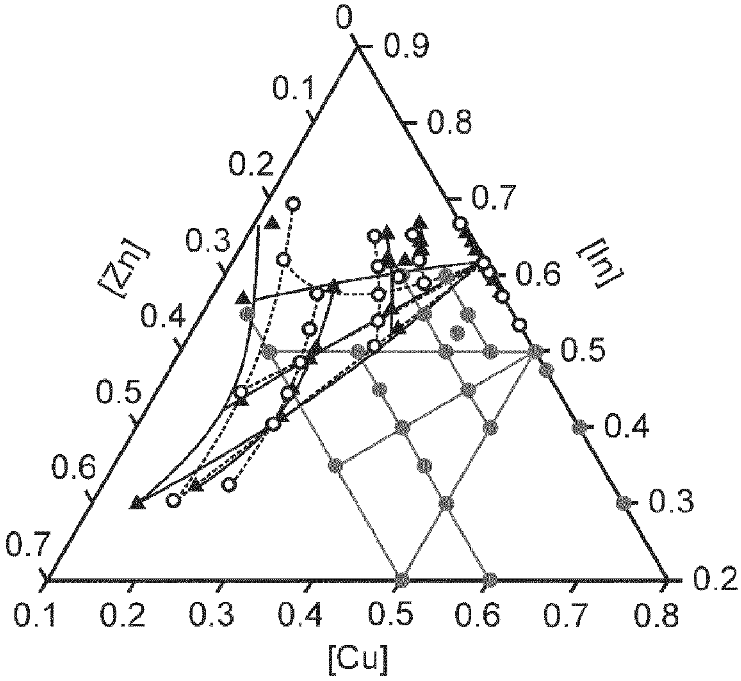
0
0.1
0.2
0.3
0.4
0.5
0.6
0.7
[Zn]
0.9
0.8
0.7
0.6
0.5
0.4
0.3
0.2
[In]
0.1 0.2 0.3 0.4 0.5 0.6 0.7 0.8
[Cu]

FIG. 1

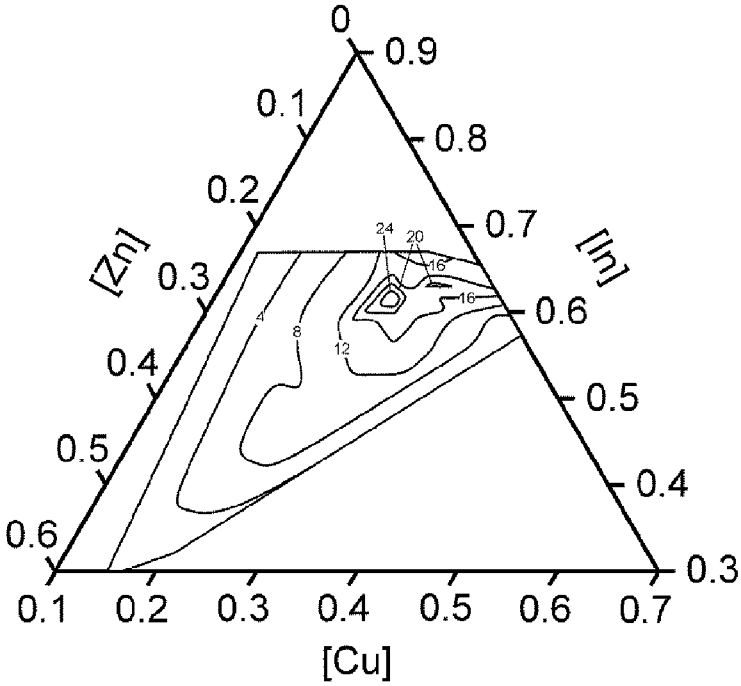
0
0.1
0.2
0.3
0.4
0.5
0.6
[Zn]
0.9
0.8
0.7
0.6
0.5
0.4
0.3
[In]
0.1 0.2 0.3 0.4 0.5 0.6 0.7
[Cu]
24
20
16
16
4
8
12

FIG. 2

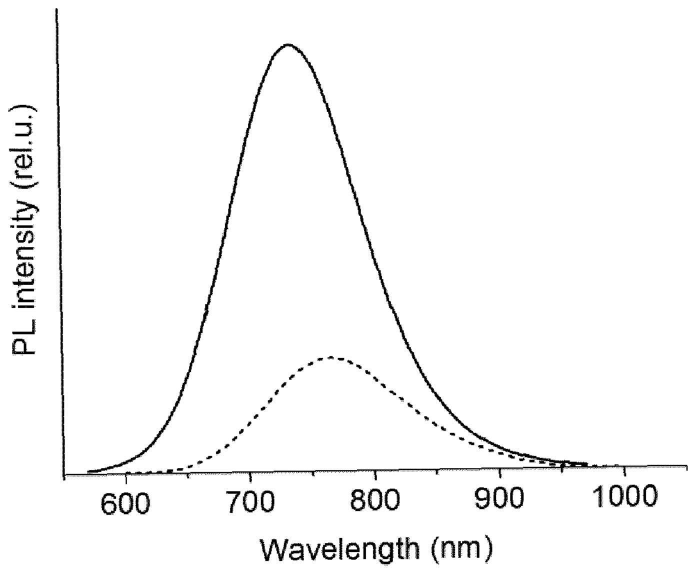
PL intensity (rel.u.)
600
700
800
900
1000
Wavelength (nm)

FIG. 3

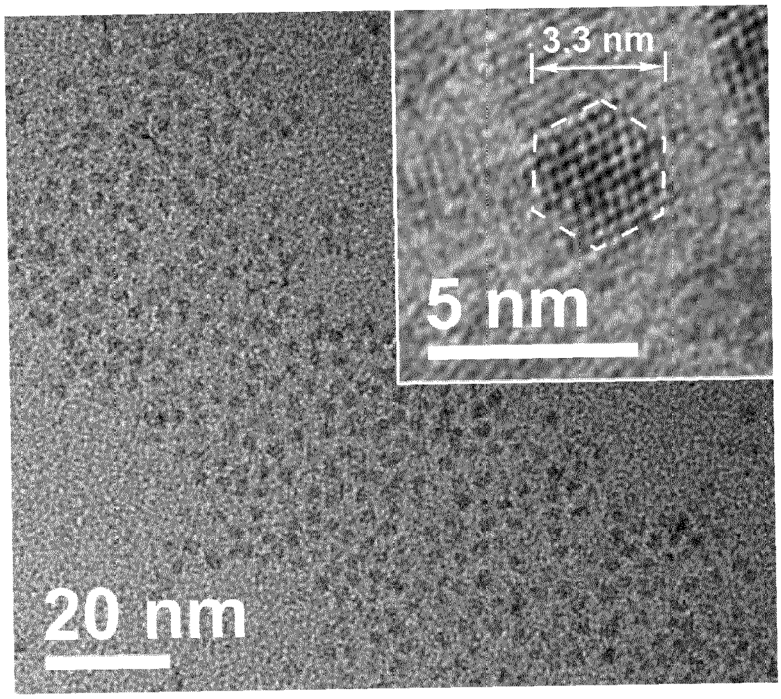
3.3 nm
5 nm
20 nm

FIG. 4

Europäisches Patentamt
European Patent Office
Office européen des brevets

# EUROPEAN SEARCH REPORT

Application Number
EP 15 19 2630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 8 409 473 B2 (SHI WEILI [US]) 2 April 2013 (2013-04-02) * claims 1-20 * ----- | 1-20 | INV. C09K11/88 C09K11/02 |
| X | WO 2012/135744 A2 (SU KAI [US]; BI WENGANG [US]; WENG ZHAORONG [CN]; BATTAGLIA DAVID [US]) 4 October 2012 (2012-10-04) * page 12, line 30 - page 18, line 26; claims 1-36 * ----- | 9-13,15 | |
| X | EP 2 768 925 A1 (KONINKL PHILIPS NV [NL]) 27 August 2014 (2014-08-27) * claims 1-15 * ----- | 1-15 | |
| Y | LISNYAK V V ET AL: "Synthesis and transport properties of prospective photovoltaic systems related to CuInSe2 and CuGaSe2", SOLAR ENERGY MATERIALS AND SOLAR CELLS, ELSEVIER SCIENCE PUBLISHERS, AMSTERDAM, NL, vol. 76, no. 4, 1 April 2003 (2003-04-01), pages 553-562, XP004409571, ISSN: 0927-0248, DOI: 10.1016/S0927-0248(02)00266-0 * paragraph [3.Resultsanddiscussion]; tables 1,2 * ----- | 1-15 | TECHNICAL FIELDS SEARCHED (IPC) C09K |
| Y | BODNAR L V ET AL: "Optical Properties of the (CuInSe2)x(2ZnSe)1-x and (CuInTe2)x(2ZnTe)1-x Solid Solutions", JOURNAL OF APPLIED SPECTROSCOPY, NEW YORK,NY, US, vol. 70, no. 3, 1 January 2003 (2003-01-01), pages 482-485, XP002993048, ISSN: 0021-9037, DOI: 10.1023/A:1025114429022 * paragraph [Experiment] * ----- | 1-15 | |

1

The present search report has been drawn up for all claims

| Place of search | Date of completion of the search | Examiner |
|---|---|---|
| The Hague | 24 March 2016 | Kövecs, Monika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 19 2630

This annex lists the patent family members relating to the patent documents cited in the above-mentioned European search report. The members are as contained in the European Patent Office EDP file on
The European Patent Office is in no way liable for these particulars which are merely given for the purpose of information.

24-03-2016

| Patent document cited in search report | Publication date | Patent family member(s) | Publication date |
|---|---|---|---|
| US 8409473 B2 | 02-04-2013 | US 2008202383 A1 | 28-08-2008 |
| | | WO 2008094292 A1 | 07-08-2008 |
| WO 2012135744 A2 | 04-10-2012 | CN 103597568 A | 19-02-2014 |
| | | US 2014022779 A1 | 23-01-2014 |
| | | WO 2012135744 A2 | 04-10-2012 |
| EP 2768925 A1 | 27-08-2014 | CN 103890134 A | 25-06-2014 |
| | | EP 2768925 A1 | 27-08-2014 |
| | | JP 5809756 B2 | 11-11-2015 |
| | | JP 2015505860 A | 26-02-2015 |
| | | KR 20140064996 A | 28-05-2014 |
| | | RU 2014110509 A | 27-11-2015 |
| | | US 2014326949 A1 | 06-11-2014 |
| | | WO 2013057702 A1 | 25-04-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8409473 B
- CN 103589427
- CN 103265948
- CN 102676162
- CN 102154007
- EP 2879211 A1


### Non-patent literature cited in the description


- **DANEK, MICHAL et al.** Synthesis of luminescent thin-film CdSe/ZnSe quantum dot composites using CdSe quantum dots passivated with an overlayer of ZnSe. *Chemistry of Materials 8.1,* 1996, 173-180